# EUROPÄISCHE PATENTSCHRIFT

(11) **EP 1 853 424 B1**
(45) Veröffentlichungstag und Bekanntmachung des Hinweises auf die Patenterteilung: **10.12.2008**
(21) Anmeldenummer: 06707159.7
(22) Anmeldetag: 22.02.2006
(51) Int. Cl.: B32B 27/12, B32B 5/26, B60R 5/04, B60R 13/08

(54) **LADERAUMABDECKUNG FÜR EIN KRAFTFAHRZEUG**
LUGGAGE COMPARTMENT COVER FOR A MOTOR VEHICLE
ELEMENT DE RECOUVREMENT DE COMPARTIMENT POUR LOGER DES MARCHANDISES, POUR AUTOMOBILE

(30) Priorität: 01.03.2005 DE 102005010788
(43) Veröffentlichungstag der Anmeldung: 14.11.2007
(73) Patentinhaber: BOS GmbH & Co. KG, 73760 Ostfildern (DE); Strähle & Hess GmbH & Co. KG, 75382 Althengstett (DE)
(72) Erfinder: CONZELMANN, Katja, 72461 Albstadt (DE); SEEG, Thomas, 73760 Ostfildern (DE); ZIMMERMANN, Gerald, 73113 Ottenbach (DE); LACHENMEYER, Friedrich, 72800 Eningen u.A. (DE); HIRLINGER, Martin, 72766 Reutlingen (DE)
(74) Vertreter: Patentanwälte Ruff, Wilhelm, Beier, Dauster & Partner
(86) Internationale Anmeldenummer: PCT/EP2006/001593
(87) Internationale Veröffentlichungsnummer: WO 2006/092227

(56) Entgegenhaltungen:
- EP-A- 1 433 660
- DE-A1- 3 613 664
- US-A- 5 813 449
- US-A1- 2002 135 198
- PATENT ABSTRACTS OF JAPAN Bd. 1999, Nr. 08, 30. Juni 1999 (1999-06-30) -& JP 11 058566 A (OKAMOTO IND INC), 2. März 1999 (1999-03-02)
- PATENT ABSTRACTS OF JAPAN Bd. 2003, Nr. 12, 5. Dezember 2003 (2003-12-05) & JP 2003 341406 A (SUMINOE TEXTILE CO LTD), 3. Dezember 2003 (2003-12-03)

## Beschreibung

Die Erfindung betrifft eine Laderaumabdeckung für ein Kraftfahrzeug mit einem flexiblen Flächengebilde, das mit einem Stirnendbereich auf einer Wickelwelle auf- und abwickelbar gehalten ist und an seinem anderen Stirnendbereich mit einem formstabilen Auszugprofil verbunden ist und ein Vliesgebilde umfasst.

Eine derartige Laderaumabdeckung ist aus der EP 1 433 660 A1 bekannt. Der dort beschriebenen Lösung lag das Problem zugrunde, dass bisherige Laderaumabdeckungen in Kraftfahrzeugen PVC umfassten, dessen Entsorgung lediglich mit erhöhtem Aufwand notwendig war. Die im Stand der Technik beschriebene Lösung wollte eine verbesserte Recyclingfähigkeit von Laderaumabdeckungen in Kraftfahrzeugen schaffen und demzufolge den Einsatz von PVC vermeiden. Gleichzeitig sollte ein qualitativ hochwertiger, ansprechender optischer Eindruck erzielt werden. Der Stand der Technik löst die Aufgabe dadurch, dass als flexibles Flächengebilde ein Vliesgebilde in Form eines Malivlieses eingesetzt wird.

JP 1 105 8566 A beschreibt eine mehrlagig aufgebauf Flächengebilde gemäß den Oberbegriff des Anspruchs 1.

Aufgabe der Erfindung ist es, eine Laderaumabdeckung der eingangs genannten Art zu schaffen, die den Einsatz von PVC vermeidet und verbesserte Gestaltungsmöglichkeiten im Hinblick auf Optik und Schallabsorption bietet.

Diese Aufgabe wird durch die Merkmale des kennzeichnemden Teils des Anspruchs 1 gelöst. Der mehrlagige Aufbau ermöglicht eine verbesserte Schallabsorption. Dies ist insbesondere von Vorteil, da die Laderaumabdeckung bevorzugt im Innenraum von Personenkraftwagen eingesetzt wird, der aufgrund seines relativ großen Innenraumvolumens erhöhte Innenraumgeräusche für die Fahrzeuginsassen bewirkt. Durch die verbesserte Schallabsorption im Bereich der Laderaumabdeckung kann die Geräuschbildung für den gesamten Innenraum reduziert werden. Der Einsatz eines Textilmaterials ermöglicht eine hochwertige dekorative Gestaltung des Flächengebildes für die Laderaumabdeckung, die insbesondere an das Design der übrigen Innenraumverkleidung angepasst werden kann. Der mehrlagige Aufbau ermöglicht zudem eine verbesserte Haptik, die insbesondere durch geeignete Auswahl des Textilmaterials weiter verbessert werden kann. Durch den Einsatz des Textilmaterials ist insbesondere der textile Charakter der Innenraumverkleidung mit der Laderaumabdeckung fortsetzbar. Das Vliesgebilde ist insbesondere aus synthetischen und halbsynthetischen Fasern wie Polyester, Polyamid, Polypropylen, Viskose oder artverwandten Fasertypen hergestellt. Die Herstellung erfolgt vorzugsweise entweder durch Wasserstrahlverfestigung oder durch Nadelverfestigung. Ein bevorzugter Gewichtsbereich für das Vliesmaterial liegt zwischen 50 und 200 g/m².

In Ausgestaltung der Erfindung ist das Textilmaterial durch eine Web- oder Maschenware gebildet. Insbesondere ist als Textilmaterial eine Strick- oder Wirkware vorgesehen. Die Maschinenfeinheit liegt zwischen 18 E und 40 E und wird bevorzugt bei 28 E angesetzt. Mit der Einheit E ist die Nadelanzahl der Strick- oder Wirkmaschine pro englischem Zoll gemeint. Als Ausgangsmaterial zur Herstellung der Strick- oder Wirkware sind synthetische Fäden und/oder Garne bevorzugt, die glatt, texturiert, rohweiss, farbig, matt, glänzend, normal- oder hochfest gestaltet sein können. Die Verarbeitung auf den Strick- oder Wirkmaschinen kann mit gleichen oder mit verschiedenen Garn-Titern für jeweils ein Dekor erfolgen. Das Textilmaterial stellt vorzugsweise eine Decklage für das Flächengebilde der Laderaumabdeckung dar und ist als Dekor gestaltet. Bevorzugtes Dekorgewicht ist zwischen 50 und 300 g/m². Die durch das Dekortextilmaterial dargestellte Oberfläche kann matt, glänzend, strukturiert oder glatt gestaltet sein.

In weiterer Ausgestaltung der Erfindung ist das Vliesgebilde als Trägermaterial für das Textilmaterial ausgebildet. Das Vliesgebilde dient somit insbesondere dazu, eine ausreichende Steifigkeit des Flächengebildes zu erzielen, um in ausgezogenem Zustand des Flächengebildes eine ebene und gestraffte horizontale Abdeckung des Laderaumes zu ermöglichen. Vorzugsweise ist das Vliesgebilde die Bodenlage und damit die Unterseite des Flächengebildes, die beim Aufwickelvorgang auf die Wickelwelle innen liegt. Das Vliesgebilde verbessert die Geräuschbildung beim Auf- und Abwickeln des Flächengebildes auf die Wickelwelle erheblich.

Die erfindungsgemäße Lösung ermöglicht ein Flächengebilde mit einem gegenüber PVC erheblich reduzierten spezifischen Gewicht.

In weiterer Ausgestaltung der Erfindung ist das Textilmaterial als Decklage vorgesehen, die insbesondere dekormäßig an eine Innenraumverkleidung des Kraftfahrzeugs angepasst ist. Dadurch fügt sich auch die Laderaumabdeckung optisch in das Innenraumdesign des Kraftfahrzeugs ein.

In weiterer Ausgestaltung der Erfindung sind das Textilmaterial und das Vliesgebilde durch eine Klebelage flächig miteinander verbunden. Dadurch wird der sandwichartige, mehrschichtige Aufbau erzielt, wobei die Klebelage eine derart flächige Verbindung zwischen Textilmaterial und Vliesgebilde schafft, dass ein Ablösen einer Lage zuverlässig vermieden wird. Zudem erfolgt die Verklebung vollflächig bis zu den Randbereichen. Die Klebelage wird insbesondere durch geeignete Klebemedien gebildet, die die Textillage und die Vlieslage auf entsprechenden Laminier- oder Kaschieranlagen entsprechend vollflächig miteinander verbinden. Die Klebelage kann insbesondere Klebefolien, vorzugsweise beidseitig klebstoffbeschichtete Kunststofffolien, mit Klebstoff getränkte Gewebe, Klebpulver, Hot-Melt-Kleber aus Thermoplasten, niedrig schmelzende Thermoplastfolien und ähnliches umfassen.

In weiterer Ausgestaltung der Erfindung umfasst die Klebelage niedrig schmelzende Kunststofffasern in dem Textilmaterial und/oder dem Vliesgebilde. Diese niedrigschmelzenden Kunststofffasern sind an der dem Textilmaterial zugewandten Oberfläche des Vliesgebildes bzw. an der dem Vliesgebilde zugewandten Oberfläche des Textilmaterials vorgesehen. Durch Erhitzung schmelzen diese Kunststofffasern und schaffen die flächige Verklebung der Textillage und der Vlieslage, ohne dass die Vlieslage oder die Textillage selbst durch die Erhitzung beeinträchtigt werden.

In weiterer Ausgestaltung der Erfindung liegt ein Schmelzpunkt der Klebelage wenigstens 30°C bis 60°C unter Schmelzpunkten des Vliesgebildes und des Textilmaterials. Sowohl die Fasern des Vliesgebildes als auch die Fasern des Textilmaterials werden somit durch die Erhitzung der Klebelage nicht beeinflusst.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch einen Ausschnitt eines Innenraumes eines Kraftfahrzeugs mit einer Ausführungsform einer erfindungsgemäßen Laderaumabdeckung und
- Fig. 2: in schematischer Schnittdarstellung den Aufbau des flexiblen Flächengebildes der Laderaumabdeckung nach Fig. 1

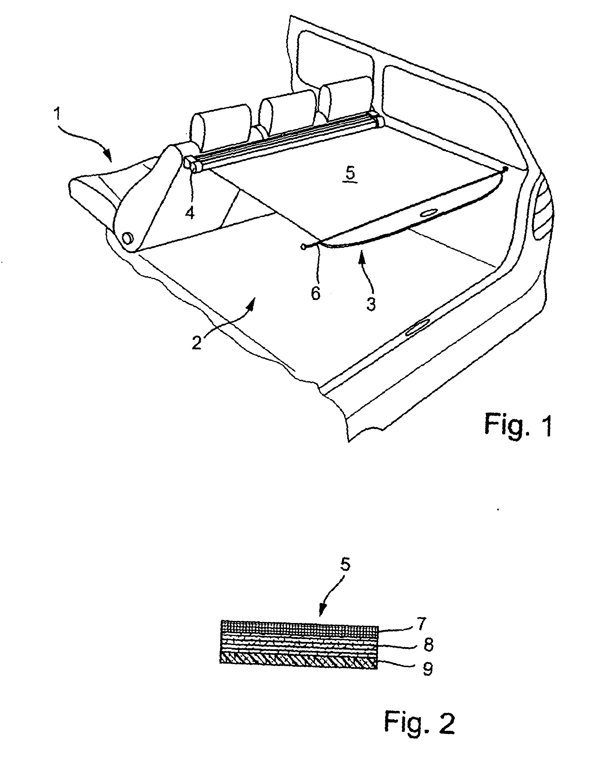

Ein Kraftfahrzeug in Form eines Personenkraftwagens gemäß Fig. 1 weist einen Fahrzeuginnenraum 1 auf, der mit zwei Sitzreihen und einem an die hintere Sitzreihe anschließenden Laderaum 2 versehen ist. Der Laderaum 2 ist in grundsätzlich bekannter Weise von einem Fahrzeugheck aus über eine Heckklappe zugänglich. Der Laderaum 2 ist durch eine Laderaumabdeckung 3 abdeckbar, die sich in ausgezogenem Funktionszustand knapp unterhalb einer Fahrzeuggürtellinie horizontal über die Länge und die Breite des Laderaumes 2 erstreckt. Die Laderaumabdeckung 3 weist ein Kassettengehäuse 4 auf, das hinter der zweiten Sitzreihe fahrzeugseitig angeordnet ist und in nicht näher dargestellter Weise eine Wickelwelle lagert. Auf der Wickelwelle ist ein flexibles Flächengebilde 5 mit einem entsprechenden Stirnrandbereich befestigt. Ein entsprechend gegenüberliegender Stirnrandbereich des Flächengebildes 5 ist mit einem Auszugprofil 6 verbunden. Das Flächengebilde 5 ist rechteckig gestaltet und erstreckt sich in aufgespanntem Zustand wenigstens über die Länge des Laderaumes 2 und zumindest weitgehend über die Breite des Laderaumes 2.

Das Flächengebilde 5 besitzt einen mehrschichtigen Aufbau, der anhand der Fig. 2 erkennbar ist. Eine obere Decklage 7 wird durch ein Textilmaterial gebildet. Eine untere Trägerlage ist durch ein Vliesgebilde 9 dargestellt. Das Textilmaterial 7 und das Vliesgebilde 9 sind mittels einer Klebelage 8 vollflächig miteinander verbunden. Das Textilmaterial 7 stellt eine Web- oder Maschenware dar. Falls das Textilmaterial 7 als Maschenware ausgebildet ist, stellt es eine Strick- oder Wirkware dar. Das Vliesgebilde 9 wird durch Nadelverfestigung oder durch Wasserstrahlverfestigung aus einem geeigneten Faserflor hergestellt. Die Klebelage 8 wird vorzugsweise in einem Kaschierverfahren zwischen das Textilmaterial 7 und das Vliesgebilde 9 eingebracht. Bei nicht dargestellten Ausführungsformen wird die Klebelage in anderer Art und Weise gebildet.

Das Textilmaterial 7, das die Decklage bildet, ist als Dekor gestaltet und an die umgebenden Verkleidungsteile des Fahrzeuginnenraumes, insbesondere an Seitenverkleidungsteile, optisch und haptisch angepasst. Das Vliesgebilde 9 hat Trägerfunktion für die Decklage und damit für das Textilmaterial 7 und bildet beim Aufwickeln oder Abwickeln des Flächengebildes 5 relativ zu der Wickelwelle jeweils die Innenlage, so dass in aufgewickeltem Zustand eine Wickellage des Vliesgebildes jeweils auf einer Wickellage des Textilmaterials aufliegt. Hierdurch wird beim Auf- und Abwickeln des Flächengebildes 5, d.h. beim Ein- oder Ausziehen, eine reduzierte Geräuschbildung erreicht.

## Patentansprüche

1. . Laderaumabdeckung für ein Kraftfahrzeug mit einem flexiblen Flächengebilde, das mit einem Stirnendbereich auf einer Wickelwelle auf- und abwickelbar gehalten ist und an seinem anderen Stirnendbereich mit einem formstabilen Auszugprofil verbunden ist und ein Vliesgebilde umfasst, **dadurch gekennzeichnet, dass** das Flächengebilde (5) mehrlagig aufgebaut ist, wobei eine obere Decklage durch ein Textilmaterial (7) gebildet ist und wobei eine Innenlage ein Vliesgebilde (9) ist, das eine Trägerfunktion für die Decklage hat.

2. . Laderaumabdeckung nach Anspruch 1, **dadurch gekennzeichnet dass** das Textilmaterial (7) durch eine Web- oder Maschenware gebildet ist.

3. . Laderaumabdeckung nach Anspruch 1, **dadurch gekennzeichnet, dass** das Textilmaterial (7) dekormäßig an eine Innenraumverkleidung des Kraftfahrzeugs angepasst ist.

4. . Laderaumabdeckung nach Anspruch 1, **dadurch gekennzeichnet, dass** das Textilmaterial (7) und das Vliesgebilde (9) durch eine Klebelage (8) flächig miteinander verbunden sind.

5. . Laderaumabdeckung nach Anspruch 4, **dadurch gekennzeichnet, dass** die Klebelage durch eine Klebstoffschicht gebildet ist.

6. . Laderaumabdeckung nach Anspruch 4, **dadurch gekennzeichnet, dass** die Klebelage eine beidseitig klebstoffbeschichtete Kunststofffolie umfasst.

7. . Laderaumabdeckung nach Anspruch 4, **dadurch gekennzeichnet, dass** die Klebelage durch eine niedrig schmelzende Thermoplastfolie gebildet ist.

8. . Laderaumabdeckung nach Anspruch 4, **dadurch gekennzeichnet, dass** die Klebelage niedrigschmelzende Kunststofffasern in dem Textilmaterial und/oder dem Vliesgebilde umfasst.

9. . Laderaumabdeckung nach Anspruch 4, **dadurch gekennzeichnet, dass** die Klebelage (8) als Kaschierlage gestaltet ist.

10. . Laderaumabdeckung nach Anspruch 4, **dadurch gekennzeichnet, dass** ein Schmelzpunkt der Klebelage wenigstens 30 bis 60°C unter Schmelzpunkten des Vliesgebildes und des Textilmaterials liegt.

## Claims

1. Luggage compartment cover for a motor vehicle with a flexible flat shaped article held by one edge area on a winding shaft such that it can be rolled in and rolled out and connected by its other edge area to a shape-stable pull-out strip and comprising a non-woven fabric, **characterized in that** the flat shaped article (5) is built up in several layers, an upper cover layer being formed by a textile material (7) and an inner layer being a non-woven fabric (9) that acts as a backing for the cover layer.

2. Luggage compartment cover according to Claim 1, **characterized in that** the textile material (7) is formed by a woven or knitted fabric.

3. Luggage compartment cover according to Claim 1, **characterized in that** the textile material (7) is matched in its decor to an interior lining of the motor vehicle.

4. Luggage compartment cover according to Claim 1, **characterized in that** the textile material (7) and the non-woven fabric (9) are connected full-surface to one another by an adhesive layer (8).

5. Luggage compartment cover according to Claim 4, **characterized in that** the adhesive layer is formed by an adhesive coating.

6. Luggage compartment cover according to Claim 4, **characterized in that** the adhesive layer comprises a plastic film coated with adhesive on both sides.

7. Luggage compartment cover according to Claim 4, **characterized in that** the adhesive layer is formed by a thermoplastic film with low melting point.

8. Luggage compartment cover according to Claim 4, **characterized in that** the adhesive layer comprises plastic fibers with low melting point inside the textile material and/or the non-woven fabric.

9. Luggage compartment cover according to Claim 4, **characterized in that** the adhesive layer (8) is designed as a lamination layer.

10. Luggage compartment cover according to Claim 4, **characterized in that** a melting point of the adhesive layer is at least 30 to 60°C lower than the melting points of the non-woven fabric and of the textile material.

## Revendications

1. Élément de recouvrement de compartiment pour loger des marchandises dans un véhicule, avec une structure plane souple maintenue à une extrémité frontale sur un arbre d'enroulement de manière à pouvoir se dérouler et s'enrouler, qui est reliée à son autre extrémité frontale avec un profilé de déroulement indéformable et comprend une structure non tissée, **caractérisé en ce que** la structure plane (5) est constituée de plusieurs couches, sachant qu'une couche extérieure supérieure est formée par un matériau textile (7) et qu'une couche intérieure est une structure non tissée (9) qui a une fonction porteuse pour la couche extérieure.

2. Élément de recouvrement de compartiment pour loger des marchandises selon la revendication 1, **caractérisé en ce que** le matériau textile (7) est constitué par un produit tissé ou maillé.

3. Élément de recouvrement de compartiment pour loger des marchandises selon la revendication 1, **caractérisé en ce que** le matériau textile (7) est assorti en termes de décoration à un habillage de l'habitacle du véhicule.

4. Élément de recouvrement de compartiment pour loger des marchandises selon la revendication 1, **caractérisé en ce que** les surfaces du matériau textile (7) et de la structure non tissée (9) sont reliées entre elles par une couche adhésive (8),

5. Élément de recouvrement de compartiment pour loger des marchandises selon la revendication 4, **caractérisé en ce que** la couche adhésive est constituée par une couche de colle.

6. Élément de recouvrement de compartiment pour loger des marchandises selon la revendication 4, **caractérisé en ce que** la couche adhésive comprend une feuille en matière plastique enduite de colle sur les deux faces.

7. Élément de recouvrement de compartiment pour loger des marchandises selon la revendication 4, **caractérisé en ce que** la couche adhésive est constituée par une feuille de thermoplastique à bas point de fusion.

8. Élément de recouvrement de compartiment pour loger des marchandises selon la revendication 4, **caractérisé en ce que** la couche adhésive comprend des fibres synthétiques à bas point de fusion dans le matériau textile et/ou la structure non tissée.

9. Élément de recouvrement de compartiment pour loger des marchandises selon la revendication 4, **caractérisé en ce que** la couche adhésive (8) est conçue comme contrecouchage.

10. Élément de recouvrement de compartiment pour loger des marchandises selon la revendication 4, **caractérisé en ce qu'**un point de fusion de la couche adhésive se situe au moins entre 30 à 60 °C en dessous des points de fusion de la structure non tissée et du matériau textile.
